(19) **Europäisches Patentamt / European Patent Office / Office européen des brevets**

(11) **EP 3 909 917 A1**

(12) **EUROPEAN PATENT APPLICATION**

(43) Date of publication:
**17.11.2021 Bulletin 2021/46**

(51) Int Cl.:
*C02F 1/00* (2006.01)      *B01D 27/02* (2006.01)
*B01D 27/10* (2006.01)      *C02F 1/28* (2006.01)
*C02F 5/08* (2006.01)

(21) Application number: **20382411.5**

(22) Date of filing: **15.05.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tapp Water S.L.**
**08004 Barcelona (ES)**

(72) Inventors:
• JERN, Magnus
  08004 Barcelona (ES)
• TROYANO, Marina
  08004 Barcelona (ES)
• FAHIM FERNANDEZ, Nasib
  08004 Barcelona (ES)

(74) Representative: **Mohammadian, Dario**
**KUKATI**
**Apartado de Correos 34031**
**08080 Barcelona (ES)**

(54) **FILTERING AND QUALITY MONITORING OF LIQUID IN REAL-TIME**

(57) Different aspects of the invention refer to an environmentally friendly filter which minimizes the use of plastics, or other non-environmentally friendly materials, by providing a filter configured for housing a removably attachable filter capsule, enabling only the filter capsule to be replaced once its lifetime is over, the filter capsule itself not comprising any plastic, silicone or metal or glue. The filter is configured to minimize the amount of space occupied, maximise its durability in order to minimize the unnecessary jettisoning of plastic, whilst providing filtered and unfiltered water in a comfortable manner for the user. The various advantageous features of the filter promote the accelerated adoption of this environmentally friendly solution by the wider population, and the corresponding minimized usage of plastic bottles.

**FIG. 3**

**Description**

FIELD OF THE INVENTION

This invention relates to the field of filter systems, and in particular, to an environmentally friendly real-time filtering and quality monitoring system for filtering liquids, for example, water.

BACKGROUND

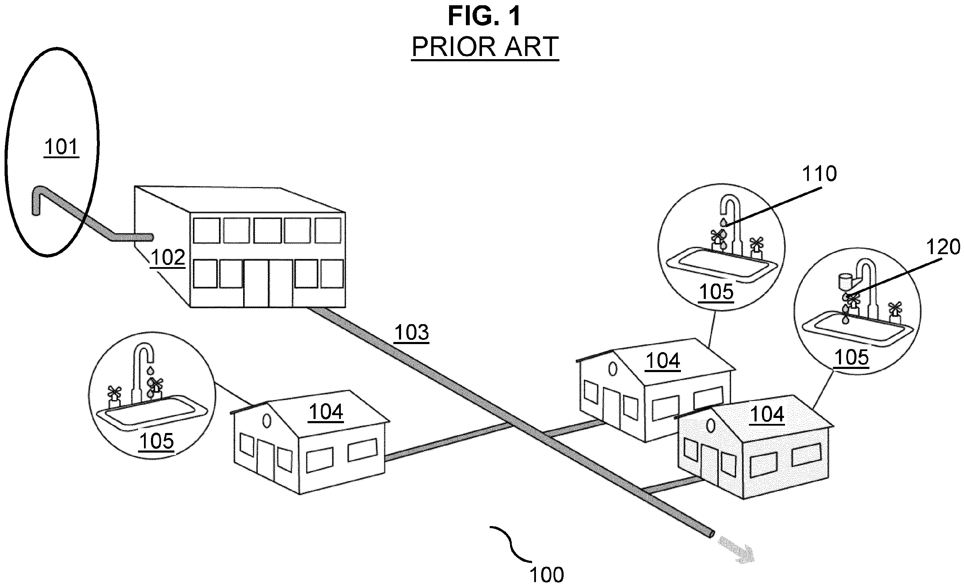

Filtration systems exist which are adapted to clean water by removing different types of impurities, or for improving the taste of the water. One type of water filters are connected offline to the piping system, filtering the water in an external circuit, and feeding it into the piping system where necessary. Another type of water filters are the so-called inline water filters, connected in series to the piping system. **FIG.** 1 depicts a typical infrastructure 100 for water provision. Water is typically collected 101 at some type of reservoir, dam, or lake, and in a filtration plant 102, the raw water is treated and fed into the main water utility piping system 103 which sources water to homes, industrial plants, or working environments. The treatment comprises both mechanical as well as chemical processes. From the main pipe, there may be one or more branch off piping systems to reach all end users 104. There is a branch-off to the curb, which feeds individual buildings, and within each building, another branch-off to each point-of-use 105, such as through the internal piping system to taps or faucets, or even directly into home domestic products, such as water dispensers or coffee machines. So far, the water provided has been treated but is unfiltered 110.

In certain scenarios, the water leaving the treatment plant could still not satisfy the most stringent health requirements, for example due to too little or too much chemicals. Even though the treated water may leave the treatment plant satisfying the health requirements, during its passage through the piping system, it can arrive at the end-point-of-use not only tasting differently, but also its composition changes, for example, due to dirty old pipes. Therefore, solutions have been developed to provide filtered water 120 directly to the end point-of-use.

However, current water filters suffer from a number of drawbacks. Most existing systems are meant for large volume water filtration, such as those used in city water filtration plants, or industrial plants for their own use. Likewise, even for home use, most filtration systems are so bulky that they are housed in separate rooms, such as in the basement or under the sink. Hence this cumbersome implementation slows down the wide adoption of this technology to such an extent, that the typical consumer prefers purchasing filtered bottled water from supermarkets. This alternative is highly detrimental for the environment, representing an incredible waste of resources, as well as being completely unsustainable for the environment.

The excessive use of plastic in society has far reaching negative implications for flora, fauna, as well as the well-being of human populations. Plastic recycling processes are not optimal, most of the plastic thrown away is not recycled properly, and a lot of it is simply dumped into landgraves or into deep sea. The existence of artificial garbage islands is well documented, as water currents bring all the plastic and garbage generated by society together into landmasses. More importantly, plastic decomposes slowly, and micro plastics enter the food chain from the sea. Several investigations have proven how most fish and seafood which humans consume have microplastics, thereby entering directly into our bodies. These investigations also conclude that there is a non-negligible amount of plastic within our bodies due to this unhealthy ecosystem. Furthermore, this problem is exacerbated the lower the quality of the plastic.

The filtration of water for mass consumer use at point-of-use has become of increasing popularity, either at home or at the working place, and inline water filters have been developed which are adapted to be connected directly onto the faucet, or tap, or at least directly onto in-building water pipes, thereby delivering ready-filtered water to any other domestic or working product, such as a water dispenser or a coffee machine. This allows filtering the water entering the building at the point-of-use, directly where the user needs it. Such filters comprise different water filtration technologies and all of them necessitate periodic replacement of the filter itself. Typically, tap water filters should be replaced every month or so, as their small size does not allow them to have a longer optimal filtering lifetime.

However, these filters also suffer from a number of drawbacks. A first type of faucet-type inline water filter comprises a single-head configuration which filters the water without any possibility of obtaining unfiltered water at the sink, for non-consumption purposes, such as cleaning. Hence, it requires a cumbersome dismounting operation to obtain unfiltered water. Filters have since been developed with a double-head configuration, wherein a mechanical valve enables switching between an unfiltered water mode, wherein the water flows directly through the first module, and a filtered water mode, wherein the water is directed to the second filtering module, from which it flows out.

These double-head filters partially solve existing problems, however introduce further ones. They are bulky due to their double-head configuration and, since the filter cartridge used is a large vertically-cylindrical object occupying a non-negligible amount of space in and around the sink, they do not facilitate their ready adoption by the wider public. They are also serving the water from different outputs depending on whether it is filtered or unfiltered water, typically between 10 - 20 cm of separation from eachother, which is annoying as most users expect to unconsciously place the recipient, for example, mug, using one hand always in the same position below the faucet as they turn on the tap with the other hand. Most of the time the user has to correct the positioning of the mug, and frequently the water is bound to splash somehow, wetting oneself as well as the surroundings, such as the floor. Also, the switching valve is prone to wear and tear due to oxidation and frequent use. Importantly though, the design of conventional filters requires the periodic purchase and replacement of a full cartridge every time the filter contents end their useful lifetime, thereby forcing the jettisoning of a large amount of plastic, silicone, metal and glue. Last but not least, they are very rudimentary and basic in their functionality.

Therefore a need exists for effectively solving the abovementioned problems.

SUMMARY

It is therefore an object of the present invention to provide solutions to the above-mentioned problems, as defined by the independent claims. Preferred embodiments are defined by the dependent claims. In particular, it is an object of the invention to provide an environmentally friendly filter which minimizes the use of plastics, or other non-environmentally friendly materials, by providing an assembly configured for housing a removably attachable filter capsule, enabling only the filter capsule itself to be replaced once its lifetime is over, the filter capsule itself not comprising any plastic, silicone or metal or glue. The filter is configured to minimize the amount of space occupied, maximise the durability of the filter in order to minimize the unnecessary jettisoning of plastic, whilst providing filtered and unfiltered water in a comfortable manner for the user. Additionally, a number of enhanced functionalities have been developed in order to promote the usage of such inline faucet filters and help reduce the amount of plastic bottles which are needlessly purchased and thrown away just to transport potable water from one place to the other. Any of these technical advantages result in the accelerated adoption of this environmentally friendly solution by the wider population, and the corresponding minimized usage of plastic bottles.

Therefore, it is one object of the present invention to provide an environmentally friendly filter for housing a replaceable filter capsule.

It is another object of the present invention to provide a method for real-time liquid quality monitoring using an environmentally friendly filter housing a replaceable filter capsule.

It is another object of the present invention to provide an infrastructure for liquid provisioning comprising at least one environmentally friendly filter housing a replaceable filter capsule.

It is another object of the present invention to provide a method for real-time liquid quality monitoring in an infrastructure comprising at least one environmentally friendly filter housing a replaceable filter capsule.

It is another object of the present invention to provide a computer program comprising instructions, once executed on a processor, for performing the method for real-time liquid quality monitoring using an environmentally friendly filter.

It is another object of the present invention to provide a computer readable medium comprising instructions, once executed on a processor, for performing the method for real-time liquid quality monitoring using an environmentally friendly filter.

The invention provides methods and devices that implement various aspects, embodiments, and features of the invention, and are implemented by various means. The various means may comprise, for example, hardware, software, firmware, or a combination thereof, and these techniques may be implemented in any single one, or combination of, the various means. The various means disclosed may be implemented as software modules within a computer program, or as hardware.

BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.

**FIG. 1** depicts a typical infrastructure for water provision.
**FIG. 2** depicts the filter according to two embodiments of the invention.
**FIG. 3** depicts an expanded view of the cartridge.
**FIG. 4** depicts the filter of the invention together with different stages of the filter capsule replacement process.

DETAILED DESCRIPTION OF THE INVENTION

Whereas this invention will be described using water as the liquid to be filtered, the skilled artisan understands that other liquids can also be applied to the filter, as long as the filtering components within the filter capsule are adapted to filter it. The remaining constructional details of the different embodiments of the invention are configured for other liquid types as well. For ease of reference, the rest of the description will make reference to water.

The filter of the invention has been developed so that it enables the easy and fast replacement of a substantially flat-shaped removeable filter capsule. The filter is therefore also dimensioned substantially as flat as possible, in order to minimize volume. Further, it has only a single exit for water, be it filtered or unfiltered. It therefore minimizes the probability of spillage. It also does not force uncomfortably changing the unconscious habits of users when pouring water from the tap, thereby being more user-friendly. The number of mechanical elements has been minimized in order to maximise robustness against wear and tear, and oxidation due to contact with water. Only the filter capsule is removed once its useful lifetime is over, however this capsule has no plastic, silicone, metal or glue. All other elements, mostly plastic and optionally silicone, metal or glue, are part of the filter whose purpose is to remain attached to the point-of-use, and, by using high quality materials and robust design, intended to be long-lasting.

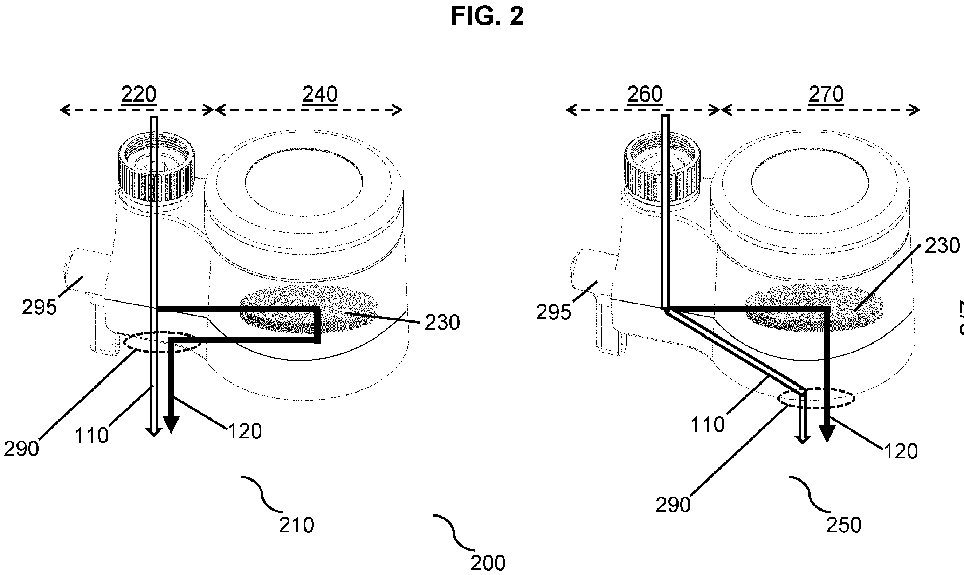

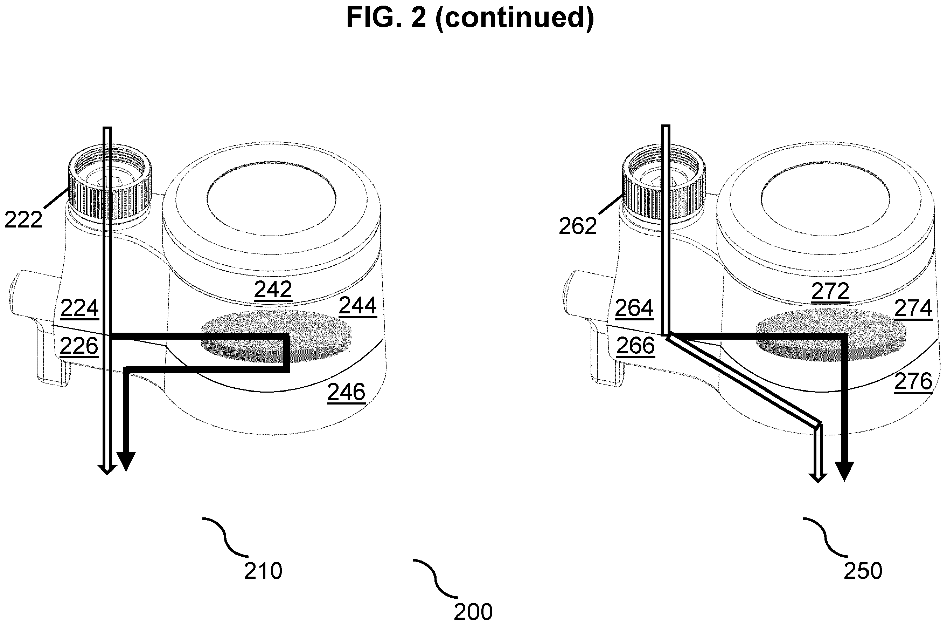

**FIG. 2** depicts two filters 200 (210, 250) according to two embodiments of the invention. Each filter system comprises two halves joined by a bridge. The bridge holds the two filter halves together, comprising the necessary channeling for directing water and for housing the wires for the water parameter sensing and data communications. In one aspect, the bridge is a separate element from the two halves. In another aspect, the bridge is permanently merged into either half (as depicted in FIG. 2). In yet another aspect, the bridge is configured to enable the removeable attachment of one half to the other.

The first half, the inlet (220; 260), is configured for being attached directly to a water pipe or to be attached to a faucet, or tap, from which unfiltered water 110 enters the filter. The second half, the cartridge (240; 270), comprises the replaceable filter capsule 230 which produces the filtered water 120. For ease of visualisation, the unfiltered water channeling, or route, is depicted by the empty arrows, whereas the filtered water channeling, or route, is depicted by the full arrows. The filter and the filter capsule are meant to be only a visual representation, and not drawn to scale.

The filter is configured with a single exit point 290 for allowing either the unfiltered 110 or the filtered 120 water to exit the filter system. In the first embodiment 210, the filter is configured with the exit point in the inlet half. In the second embodiment 250, the filter is configured with the exit point in the cartridge half. Therefore, the single exit point ensures the commodity of the users who are already used to having the water leave the tap always from the same position. This reduces wasted water not entering the recipient as well as unnecessary splashing. The exit point comprises an aerator configured to mix air with the exiting water flow.

The filter also comprises a switch 295. The user can select to have unfiltered or filtered water by operating the switch. If the switch is in the unfiltered state, the unfiltered water is directed through the rest of the filter out the exit point. In the first embodiment 210, the unfiltered water passes straight through and exits the inlet. In this aspect, the filter comprises channeling configured to direct unfiltered water entering the filter out the inlet exit point. In the second embodiment 250, the unfiltered water is directed from the inlet to the cartridge, where it bypasses the replaceable filter capsule, without filtering. In this aspect, the filter comprises channeling configured to direct unfiltered water entering the filter out the cartridge exit point.

On the other hand, if the switch 295 is in the filtered state, the unfiltered water is directed from the inlet to the cartridge, where it is directed through the filter capsule, and from there the filtered water is directed out the exit point 290. In the first embodiment 210, the filtered water from the filter capsule is directed back to the inlet, where it exits out the inlet exit point. In this aspect, the filter comprises channeling configured to direct water filtered by the filter capsule out the inlet exit point. In the second embodiment 250, the filtered water from the filter capsule is directed out the cartridge exit point. In this aspect, the filter comprises channeling configured to direct water filtered by the filter capsule out the cartridge exit point.

The channeling is configured in the optimum manner to minimize space occupied as well as maintain the water flow and pressure expected by users from their faucets, as well as enable the real-time sensing of both filtered and unfiltered water by the sensors and the water's discharge via a single exit point. Therefore, the channeling is configured on at least one plane as part of the channeling passes through the bridge area between inlet and the cartridge. In one example implementation (FIG. 2), part of the channeling directs the water from inlet to cartridge, and vice versa, in a plane perpendicular to the view of the filter. In another example implementation, the channeling runs across two perpendicular planes in order to enable determining water quality parameters of both the unfiltered water as well as the filtered water, as will be described. In yet another example implementation, the channeling is configured on multiple planes in any angle in relation to eachother. The channeling is thus configured to minimize the overall volume, yielding a substantially flat configuration.

FILTER PHYSICAL STRUCTURE

The continuation of FIG. 2 depicts in further detail the different parts of the filter. The inlet comprises a top section (222; 262), a middle section (224; 264), and a lower section (226; 266). The cartridge comprises a top section (242; 272), a middle section (244; 274), and a lower section (246; 276).

The inlet top section is configured with adaptation means for removably fastening the filter directly to the faucet, or water source piping system, allowing the passage of water without leaking. The adaptation means is configured to hold fixedly in place the whole filter, enabling the user-friendly replacement of the filter capsule without having to dismount the filter system.

As mentioned, the inlet middle section comprises a switch. In one example implementation, the switch is configured as an external handle and an internal ball valve, which in one state of the handle directs the water to an unfiltered channeling route and in another state directs the water to a filtered channeling route. The handle can be implemented as a manual handle or a button, or by any other means configured to signal one of two desired states. In another aspect, the handle is implemented by a remote switching mechanism, comprising an external handle and an internal switch state detection means for determining whether the switch is in unfiltered or filtered mode. In one aspect, this is implemented by a magnetic sensor, which remotely detects the position of the external handle comprising a magnet. This configuration requires no perforations on the wall separating the external handle from the valve, which has been seen to be prone to oxidation or rusting. The change of state is thereby transferred without any mechanical switches, maintaining a watertight configuration, without leaking and which can last longer in time without wear and tear.

In another aspect, the inlet middle section comprises channeling means to direct the water as a function of the state of the switch. Independently from the state of the switch, whether in unfiltered or filtered state, the water always ends up in a lower section which comprises the necessary sensor means for performing water parameter readings, and is discharged out the exit point of that lower section.

In the first embodiment 210, when the switch is in the unfiltered state, the channeling means are configured to direct the water from the inlet middle section through the inlet lower section out the inlet exit point. On the other hand, when the switch is in the filtered state, the channeling means are configured to direct the water from the inlet middle section to the cartridge middle section, where it enters the filter capsule, and after filtering, the filtered water is directed through the cartridge lower section back to the inlet lower section, for discharging through the inlet exit point.

In the second embodiment 250, when the switch is in the unfiltered state, the channeling means are configured to direct the water from the inlet middle section to the cartridge middle section, where it bypasses the filter capsule, and without filtering, the water is directed through the cartridge lower section for discharging through the cartridge exit point. On the other hand, when the switch is in the filtered state, the channeling means are configured to direct the water from the inlet middle section to the cartridge middle section, where it is directed into the filter capsule where it is filtered, then through the cartridge lower section, and discharged from the cartridge exit point.

One of the main problems restraining the adoption of existing inline filters is the lack of trust in the filtering mechanism. In very old buildings or cities with old piping infrastructures, many users do not believe that any filter can improve the quality of the water from their faucets. There is also a stigma associated with the small size of the filters, in the sense that it does not generate trust in the filtering ability if the filters are small. In order to generate trust, and demonstrate that a viable technological alternative to plastic bottles is readily available, the filter of the invention has been designed with additional functionalities, which broadly comprise monitoring at least one water parameter and communicating it to the user. The monitoring is performed by at least one sensor and internal wiring to a control means which processes and communicates the information visually and/or audibly and/or via wireless communication means to an application executing on an external electronic communication device.

The filter comprises a turbine sensor, a switch sensor and chamber sensors. The turbine sensor measures water flow or pressure. The switch sensor determines whether it is in the unfiltered or filtered state. The remaining sensors are housed in the lower section, either of the inlet or the chamber depending on the embodiment, to measure water quality parameters, such as temperature, conductivity, pH and turbidity but may also include other sensors such as lead, nitrate, chloride, chlorine and more. In one aspect, the sensor chamber is configured to house up to 10 sensors and the corresponding control means are configured to control them. As mentioned, the lower section is configured to comprise single sensing means configured to sense water parameters before and after filtering.

In order to implement these functionalities, the cartridge top section comprises control means (such as software running on a microchip, and additional electronics or circuitry) housed in a removably attached sealed housing. This ensures separation from the liquids, protecting all the circuitry from corrosion or oxidation. The control means are configured for performing at least one of collecting data from the sensors, controlling the visual indicators (for example, LED lights), communicating data (such as transmitting and receiving using Bluetooth technology) to and from an external communications device (such as a smartphone), or interacting with a software application executing on the external communications device.

The several electronic components of the control means (printed circuit board, microprocessors, connectors) connect to the rest of the filter sections via wires. In one example implementation, four wires connect to the sensors housed in the chamber, two wires connect to the switch sensor housed in the inlet and another two wires connect to the turbine housed in the inlet. The top section therefore comprises a wire cavity configured for housing the bundle of wires transporting the data from the various sensors and necessary to feed electrical power to the sensors, and read the data from the sensors. This wire cavity ensures the protection also of the wires from contact with water.

The cartridge middle section is configured to house the lower section which supports the filter capsule. All of the filter capsule and lower section is housed within the middle section for the exception of the lower section handling means, used to removably dismount the different modules. As mentioned, the cartridge middle section comprises channeling means configured to receive water from the inlet middle section. In the first embodiment 210, the cartridge middle section channeling means are configured to direct the water through the filter capsule and to the cartridge lower section, where it is returned to the inlet. In the second embodiment 250, the cartridge middle section channeling means are configured to direct the water either directly to the cartridge lower section, or to direct the water through the filter capsule and then to the lower section. In either case, water parameter readings are taken in the lower section before being discharged through the cartridge exit point.

The cartridge lower section is different in the different embodiments. In the first embodiment 210, the cartridge lower section comprises channeling means to direct the filtered water from the filter capsule to the inlet lower section. In the second embodiment 250, the cartridge lower section comprises a water chamber, sensor means, the exit point, and channeling means for directing the filtered water from the filter capsule through the water chamber, where the sensor means perform their readings, and out of the exit point.

The water chamber is configured for holding the water a short interval allowing the sensor means to perform its readings. The sensor means comprise at least one sensor for determining a water-related parameter. The communication means is configured for wirelessly transmitting the sensor data to an external receiver. Hence, the filter is thus configured to monitor the quality of both the unfiltered water as well as the filtered water. In one aspect, the sensor means comprise a filter capsule sensor, configured to determine the replacement of the filter capsule. In one example configuration, this sensor is a magnetic sensor which provides an indication every time a magnetic field is broken between two magnets, the signal is transmitted via the corresponding wire to the control means in order to reset a filter capsule lifetime timer. This time of use parameter, together with the remaining water quality parameters, allow to determine the right moment to replace the filter capsule.

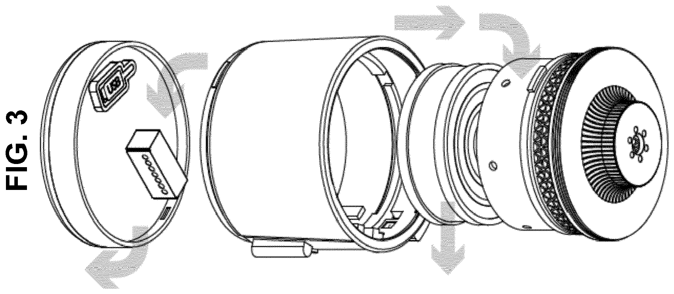

**FIG. 3** depicts an expanded view of the cartridge half. The cartridge is configured in modules, such that the top section, the middle section, and the lower section are removably attachable to eachother (indicated by the arrows). The position of the exit point has not been identified, however, the figure applies to both embodiments alike, as the first embodiment would have the exit point configured in the inlet, and the second embodiment configured in the cartridge.

The cartridge top and middle sections are configured with fastening means enabling the user-friendly handling of the separate sections. For example, it might be desirable to remove the top section to facilitate its recharging, or short range data exchange with a communications device, such as a computer or a smart phone, without disassembling the rest of the filter, in particular the filter capsule.

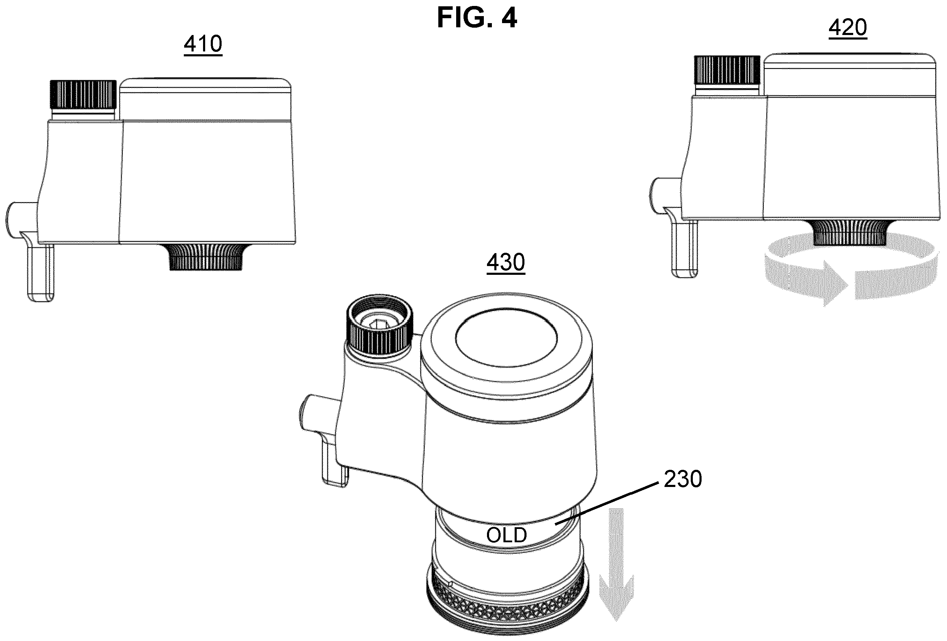

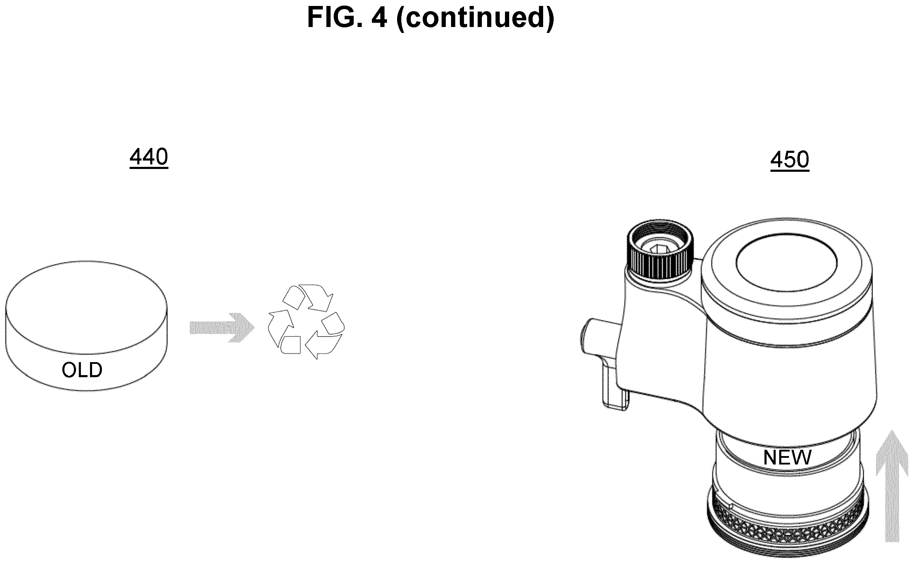

The cartridge middle and lower sections are configured with fastening means enabling the user-friendly handling of these separate sections. The main usage is for replacing the filter capsule. By a simple twist motion, the lower section separates under the influence of gravity, exposing the filter capsule to be replaced. **FIG. 4** depicts the filter according to either embodiment of the invention together with different stages of the filter capsule 230 replacement process. The first view 410 depicts the assembled filter system, comprising the inlet and the cartridge housing the filter capsule. The cartridge lower section, or filter capsule chamber, is housed within the cartridge middle section, or cartridge body. The body and chamber are configured allowing their easy attachment and detachment. The chamber is housed almost fully within the body, thereby minimizing the space or volume of the cartridge. This allows maintaining an overall flat configuration and reduces the volume occupied, resulting in a trouble-free filter system when being used, for example, in a kitchen faucet, where ample space under the tap and within the sink area is an important factor for user commodity.

The attachment or detachment can be implemented by a configuration allowing screwing or unscrewing, whereas it can also be implemented by any other means allowing the removable coupling of the filter capsule chamber to the cartridge body. The detachment 420 of the filter capsule chamber allows it to separate simply due to the downward pull of gravity 430 (as shown by the arrow, in this case, after unscrewing). The old filter capsule can then be removed 440 for recycling, a new filter capsule placed within the cartridge filter capsule chamber, and inserted into the body and attached 450 back to complete the replacement process. It is also easier to clean the inside of the body and chamber if so desired as the filter capsule is being replaced. The detachment of the top section enables sinking the middle and lower sections in water without harming the electronic circuitry of the filter.

REPLACEABLE FILTER CAPSULE

Both filter embodiments are the same in as far as the filter capsule 230 refers. The filter capsule comprises a central filter block completely surrounded by a permeable membrane. In one example implementation, the filter block is a carbon filter block composed of active carbon particles in a doughnut shaped configuration comprising a central cavity. The carbon particles filter organic compounds such as volatile organic compounds, herbicides, pesticides, Trihalomethanes, chlorine, and other non-polar contaminants. They also reduce some other charged components in water such as nitrates, chloride and some heavy metals including lead. Advantageously, they do not reduce healthy minerals such as calcium, magnesium, potassium or sodium.

The filter capsule may optionally comprise other filtering elements, such as polyphosphate particles, either mixed with the carbon particles as part of the filter block, or as separate elements placed within the central cavity. The polyphosphate particles act as a limescale inhibitor. They release phosphate into the water which bond with the calcium in order to prevent the calcium from scaling, and generating unwanted calcium carbonate.

In an example implementation, the permeable membrane is nonwoven fabric, such as polypropylene, which helps reduce turbidity caused by suspended solid found generally in tap water. The filter block is fully wrapped by the outer membrane. This configuration allows the filter capsule to be safely handled by the user while replacing it, without any risk of contacting possibly harmful chemical substances.

FILTER FUNCTIONAL STRUCTURE

By using a combination of sensors several parameters or indices can be calculated and predicted. One index is the LSI (Langelier Index) which predicts tendency for scale/limescale and pipe corrosion:

$$LSI = pH - pHs \qquad \text{[expression 1]}$$

where

$$pHs = (9.3 + A + B) - (C + D) \qquad \text{[expression 2]}$$

where:

A = (Log10[TDS] - 1)/10 = 0.15
B = -13.12 x Log10(T + 273) + 34.55 = 2.09 at 25°C and 1.09 at 82°C
C = Log10[Ca2+ as CaCO3] - 0.4 = 1.78
D = Log10[alkalinity as CaCO3] = 1.53

where TDS represents the total dissolved solids, T represents the temperature in Celsius (°C), Ca2 represents calcium ions, CaCO3 represents calcium carbonate.

The indications for the LSI and the improved LSI by Carrier (Table I) are based on the following values:

- If LSI is smaller than 0: Water is undersaturated with respect to calcium carbonate. Undersaturated water has a tendency to remove existing calcium carbonate protective coatings in pipelines and equipment.
- If LSI is equal to 0: Water is considered to be neutral. Neither scale-forming nor scale removing.
- If LSI is larger than 0: Water is supersaturated with respect to calcium carbonate (CaCO3) and scale forming may occur.

TABLE I

| LSI (Carrier) | Indication |
|---|---|
| -2,0 < -0,5 | Serious corrosion |
| -0,5 <0 | Slightly corrosion but non-scale forming |
| LSI = 0,0 | Balanced but pitting corrosion possible |
| 0,0<0,5 | Slightly scale forming and corrosive |
| 0,5<2 | Scale forming but non corrosive |

Experience has shown that Langelier Index in the range of -1 to +1 has a relatively low corrosion impact on metallic components of the distribution system. Langelier Index values outside this range may result in laundry stains or leaks. By calculating/estimating LSI before and after water filtration the system can also predict the reduction in limescale with or without filtering. Limescale is considered a major nuance by consumers and many people are also convinced that it will negatively impact health even though there is no scientific evidence of this.

Another index is derived from the combination of turbidity with total dissolved substances. If TDS/Conductivity is stable and Turbidity changes in the water network then this is a possible indicator of pipe corrosion or greater release of biofilm. Furthermore this can be combined with water pressure. A drop in water pressure or considerable fluctuation in water pressure may be an indicator of clogging of the pipes due to scale, biofilm or corrosion.

Data from multiple filters is combined together as this will for example show:

a) If multiple filters in the same building indicate higher LSI, higher turbidity or higher TDS than other buildings in the neighborhood that these are strong indicators that there is pipe corrosion or biofilm release in the building.

b) If multiple filters in a neighborhood indicate increases in LSI, higher turbidity or higher TDS than surrounding neighborhoods then this indicates potential problems with the city pipe.

c) If there are continuous fluctuations in LSI, turbidity and TDS with changes in water pressure than this may indicate either local or city water pipe issues.

The control means are configured for controlling the indicators, visual and/or audible, such as different LEDs or their colour, intensity, blinking frequency, as a function of the data from the different sensors. In one aspect, the indicators are controlled additionally as a function of information received from the external communications device, be it user instructions or data stored in the water quality database. In one aspect, the indicators are controlled additionally as a function of the last time the filter capsule was replaced. In one aspect, the indicators are configured for indicating the level of usage of the filter, remaining useful lifetime or whether it is time for replacement, or the status of the switch between filtered or unfiltered mode, different degrees of quality of the filtered or unfiltered water, whether it is actively communicating with external communication devices and exchanging data, indicating the level of usage of the rechargeable battery or remaining useful lifetime.

Among the many purposes of the indicators:

- is to make customers feel safe to drink the water.
- measure differences in the local tap water vs the water provider source and thereby predict / warn of issues.
- when to change the cartridge (based on real values and not hypothesis), great for business users - usage and flow.
- how to protect the filter to get the best efficiency possible (flow and temperature).
- inform when the filter hasn't been used for a period to make sure water it's flushed or changed.
- potentially inform about expected taste and whether it's thirst quenching or not.

Regarding the visual indicators, their colour and/or intensity can be controlled to provide different indications. A GREEN light indicates that the filtered water is safe to drink. An AMBER or BLINKING light indicates that the filtered water is safe to drink but with some risk. A RED light indicates that the water is not safe to drink.

In a standard operation, the user who wants a glass of water to drink, turns on the faucet which automatically switches on the filter (due to the switch state determination means), the sensors are also automatically activated as soon as water starts to flow through the filter, the indicators indicate the last known water quality status, the control means attempts to connect to the external mobile application to check if drinking safety has changed, and, depending on predetermined water safety rules, the indicator status changes. In case of a visual indication, the LED changes to BLUE, BLINKING BLUE or RED. Once the faucet is closed, and the water stops flowing, the filter attempts to synchronise data with external mobile application once more, and the sensors enter sleeping mode and stop measuring data.

The control means are configured to provide an indication of the degree of limescale in the water before filtering, as indicated in TABLE II:

TABLE II

| | |
|---|---|
| Very high | Water hardness higher than 181 mg CaCO3/l |
| High | Water hardness 121-180 |
| Medium | Water hardness 61-120 |
| Low | Water hardness below 60 |

Both the chlorine parameter and the limescale parameter can be combined to determine the taste status of the water before filtering as indicated in Table III:

TABLE III

| Bad | If free chlorine before filtering is above 0.6 mg/l and hardness is above 200 mg CaCO3/l |
|---|---|
| OK | If free chlorine before filtering is between 0.4-0.6 mg/l and hardness is below 100 mg CaCO3/l |
| Good | If free chlorine before filtering is below 0.4 and hardness is below 50 mg CaCO3/l |
| *Bitter or Medicinal* | *If copper before filtering is above 1.2 mg/l* |
| *Metallic* | *If Zinc above 0.5 mg/l, Iron above 0.2 mg/l or Manganese above 0.05 mg/l* |

It has been ascertained that sometimes it is possible to have certain off-chart changes in the water parameters which could lead to more severe health-related problems. Among these problems are:

- a major peak in conductivity or salinity or turbidity or Total Dissolved Solids, TDS (dissolved solids refer to any minerals, salts, metals, cations or anions dissolved in water. Total dissolved solids comprise inorganic salts, principally calcium, magnesium, potassium, sodium, bicarbonates, chlorides, and sulfates, and some small amounts of organic matter that are dissolved in water).
- a major contamination issue such as increased nitrates or e-coli bacteria.
- potentially unknown water quality issues.

In order to detect the start of more severe health related issues with the water provision, and aid in the decision making process of what steps to undertake, warn the customer, or which customer or entity to notify, three sensors have been integrated: A water flow sensor, a conductivity sensor and a temperature sensor.

In one aspect, the filter comprises a conductivity sensor which periodically determines a conductivity parameter of the liquid in the chamber. The conductivity parameter provides information regarding the conductivity of water which is directly related to the amount of salts dissolved in it. To measure conductivity, a signal is induced between two electrodes set in the lower section chamber and the attenuation in signal strength determined. The average value is calculated, and depending on the fluctuations thereof, the water conductivity is determined. This parameter, together with the physical characteristics of the electrodes used, enable the estimation of the amount of dissolved salts in the liquid, and thereby determine the salinity parameter.

One of the most important parameters that affects the reading of water conductivity is its temperature. Therefore, the readings from the temperature sensor are closely monitored. It has been observed that the degree of water filtering is not the same at different temperatures. Hence, in one aspect, the processing means are configured to maintain the optimal filtering of water within a predefined temperature range as a function of the temperature parameter.

Another issue is that certain bio-materials used in different components of the filter are sensitive to high temperatures. Hence, in another aspect, the processing means are configured to emit an indication that a maximum temperature threshold has been exceeded and negatively affects the integrity of the filter itself. This unwanted temperature effect is therefore quickly and efficiently prevented.

Also, the temperature parameter is used to determine whether the salinity value read by the salinity sensor needs compensation or not. In one example implementation, the temperature sensor is implemented as a resistive sensor, which presents variations of its resistance depending on the changes in the temperature of the environment, together with a set of operational amplifiers and passive elements to convert the resistance values of the sensor into data interpretable by the processing means.

In one aspect, the inlet middle section comprises a water flow sensor, which can be implemented, for example, by a water turbine. The turbine is made of a magnet and a propeller that measures the flow and pressure of the water with very high accuracy. The results of the water flow measurements are sent to the control means housed in the cartridge via wires through the bridge.

In one aspect, the filter comprises a turbidity sensor which periodically determines a turbidity parameter of the liquid in the chamber. The turbidity parameter provides an indication of the effectiveness of the particle removal processes and/or of disinfection effectiveness (as high turbidity interferes with disinfection). It also provides an indication of rapid changes in source water quality and distribution system integrity.

In addition to these sensors, the filter comprises an ion sensor which periodically determines at least one parameter of the liquid in the chamber, among a pH parameter, a chlorine parameter, a ORP parameter, a nitrate parameter, a sodium parameter, a calcium parameter, a dissolved oxygen parameter and a heavy metal parameter, such as lead.

In one aspect, the information and data is stored in an external water quality database with reports/signals from each tap water provider including whether the water is safe to drink, or not. The database comprises comparative information about the water going into the water network from the water operator with that of the water delivered at the point of use at home, before and after filtering. This innovation combines the water quality test data carried out by each water provider/utility with the water coming out of the faucet and can thereby make assessments about the tap water quality for the end user and the water utility.

One advantage of this database is that water quality information can be provided to the user of the filter. Hence, this comparative information enables the user to ascertain the quality provided at their premises, and also the positive effect provided by the filter. This enables to assess what substances or chemicals are added to the water from the pipes, water tanks, if there are water leaks, leeching, corrosion or other issues. The most important parameters in this case are turbidity, conductivity, pH and copper levels.

Another advantage of this database is that the water quality information is made available to the utility companies and water treatment plants in order to improve the quality of the water provided by the whole infrastructure. A real-time water quality monitoring system is therefore implemented across all user-end-points, providing very relevant information about the end quality of the produce/service provided, and indications of problematic areas, or areas for further improvement. It also enables the immediate identification of problem outburst, such as bacterial outbursts, or heavy metal peaks, or excessive chlorine presence, which should be immediately corrected. On a different note, the determination of hardness levels is relevant for consumer products, such as washing machines, dish washer, coffee machines, and so forth. It also permits the statistical analysis or benchmarking between different water suppliers or regions, in view of providing a harmonized utility system with the same quality standards for all users alike.

Yet another advantage of this database is that the water quality information can be provided to the public in an easily understandable format. More often than not, the precise scientific values of water quality parameters is completely unknown to both user and public alike. For example, what does a turbidity level of 5 UNF mean in terms of water quality? Is 60.3 mg/L of calcium good or bad? Is a pH of 8.1 a good value? The features of the invention enable translating this technical information into simple and easily understandable information, as well as visual and audible indicators, so that the general public can gain confidence, generally, in the water provision infrastructure, and particularly, in the filter.

In one aspect, the functionality entails the capability of measuring and communicating water parameters before filtering. Hence, as soon as a new filter is installed in new premises, simply opening the tap automatically triggers the sensing mechanism. If in unfiltered mode, the tap water parameters are determined and communicated. This provides an immediate indication of the quality and/or taste of the water provided by the utility infrastructure, giving an indication of the level of treatment of the water, the effect of the piping system, whether the unfiltered tap water complies with the regulated health standards, and whether it can be safely consumed. It therefore gives an indication of the global quality of the unfiltered tap water at that premise.

In another aspect, the functionality entails the capability of measuring the water parameters after filtering. Hence, as soon as a new filter is installed in new premises, simply opening the tap automatically triggers the sensing mechanism. If in filtered mode, the filtered tap water parameters are determined and communicated. This provides an immediate indication of the quality and/or taste of the water provided by the filter, giving an indication of whether it complies with the regulated health standards. It therefore provides information as to whether the filtered water can be consumed, increasing the consumer's level of trust, and thereby accelerating the replacement of plastic bottles by permanent filters.

Yet in another aspect, the functionality entails the capability of measuring the water parameters before and after filtering, that is, when the filter is in unfiltered mode or in filtered mode. The idea is that there is no need to dismount the filter from the faucet, or remove the filter capsule. During normal operation, the water parameters are determined for the unfiltered water as well as the filtered water. The same filter is capable of determining the water parameters when in unfiltered mode and also in filtered mode using a single set of sensors. This provides a comparative indication of the effect of the filter on the water parameters, quality and/or taste, as an objective reading is taken before filtering and after filtering. This unique configuration helps even more to gain confidence of the filter, reducing the unnecessary use and jettisoning of plastic bottles just for the transport of water.

The system enables local issues with pipe corrosion, leeching, biofilm release (bacteria build up in the pipes), leaks, poorly placed pipes, pipe clogging, poorly maintained water tanks or issues with water pumps. By analyzing the data from many sensors it is possible to identify issues, examples of which are:

a) Within a building (by floor/apartment/home/etc) by comparing the sensor data between households, floors/levels.

b) For entire buildings/individual houses by comparing the sensor data between the buildings.

c) Between neighborhoods / areas within a city.

The comparison to identify issues include:

1. Turbidity - which indicates an increase in Total Suspended Solids, TSS, in one area vs the general water supply showing clearly that something (any kind of particles larger than 2 micron including gravel, sand, silt, clay, rust, algae or biofilm) being is being added to the water that wasn't there.

2. Conductivity - which indicates an increase in Total Dissolved Solids, TDS, in one area vs the general water supply showing clearly that something (inorganic salts and small amounts of organic matter) is being added to the water that was not there.

3. Water pressure - reduction in water pressure between buildings, houses and apartments on the same floor indicate problems such as clogged pipes or major build up in pipes.

4. Water temperature - increases in water temperature between buildings, houses and apartments may indicate leaks, poor placement of pipes (too close to hot pipes or other heat sources).

In another aspect of the invention, the control means comprise power management means configured to minimize the power consumption of the filter, including its several electrical energy draining components, such as sensors, indicators, or electronic circuitry. One of the main objectives in this aspect is that of avoiding the use of non-rechargeable batteries, which are not environmentally friendly. Therefore, the cartridge top section comprises a Li-Po type battery, and battery charging system. In addition, the power management algorithm is configured to minimize the current consumption of the filter, providing a useful life of at least 6 months between battery recharges.

In one aspect, the power management algorithm comprises alternating the filter between active and deep sleep states. In another aspect, the power management algorithm comprises determining whether there is water flowing through the inlet, as indicated by the switch determining means in the inlet, and is configured to activate the plurality of sensors and their reading only when the filter is being used.

Therefore the different embodiments and aspects of the invention described provide an environmentally friendly filter which minimizes the use of plastics, or other non-environmentally friendly materials, by providing a filter configured for housing a removably attachable filter capsule, enabling only the filter capsule itself to be replaced once its lifetime is over, the filter capsule itself not comprising any plastic, silicone or metal or glue. The filter is configured to minimize the amount of space occupied, maximise the durability of the filter in order to minimize the unnecessary jettisoning of plastic, whilst providing filtered and unfiltered water in a comfortable manner for the user thereby providing an overall more environmentally sustainable product. Additionally, a number of enhanced functionalities have been developed in order to promote the usage of the inline faucet filter. Any of these technical advantages result in the accelerated adoption of this environmentally friendly solution by the wider population, and the corresponding minimized usage of plastic bottles which are needlessly purchased and thrown away just to transport potable water from one place to another.

What has been described comprises several example embodiments. Since it is not possible or feasible to describe all the variations of combinations and permutations of the inventive concept that would give rise to a large number of embodiments and redundant paragraphs, it is understood that the skilled artisan would derive these different possible permutations and combinations of the different embodiments and aspects described after a direct and objective reading of this disclosure. Therefore, the main aspects and embodiments have been described, understanding that they comprise the remaining combinations, variations and modifications, whilst they are comprised within the scope of protection defined by the claims. The skilled person would understand that the presented description of the embodiments does not limit the invention, nor do the drawings.

In the following, further examples of the invention are provided:

A filter configured for providing unfiltered and filtered liquid, the filter comprising: an inlet configured for receiving unfiltered liquid from an external source; a cartridge, coupled to the inlet, configured for receiving a replaceable filter capsule configured for filtering the liquid; an exit point configured for discharging the liquid, unfiltered or filtered, from the filter; and sensing means configured for determining at least one parameter of the unfiltered liquid as well as the filtered liquid.

The filter, further comprising a bridge area for attaching the inlet and the cartridge to eachother. The filter, wherein the bridge area is configured to enable the removeable attachment of the inlet and the cartridge. The filter, further comprising switching means configured for setting the filter in unfiltered mode or filtered mode. The filter, further comprising: unfiltered channeling means configured for directing the unfiltered liquid to the exit point without passing through the replaceable filter capsule; and filtered channeling means configured for directing the unfiltered liquid through the replaceable filter capsule before discharging the filtered liquid through the exit point. The filter, wherein the filter comprises a single exit point configured either in the inlet or in the cartridge. The filter, wherein the channeling is configured in more than one plane. The filter, wherein: the inlet comprises a top section, a middle section, and a lower section; and wherein the cartridge comprises a top section, a middle section, and a lower section. The filter, wherein the inlet top section is configured with adaptation means for removably fastening the filter directly to the faucet, or piping system. The filter, wherein the switching means comprises a handle on the outside and a switch state detection means and a valve in the inside, the handle and the switch state detection means configured for determining whether the handle is in unfiltered or filtered mode without physical contact with eachother. The filter, wherein, when the exit point is in the inlet: the unfiltered channeling means are configured to direct the liquid from the inlet top section through the inlet middle section to the inlet lower section for discharging through the inlet exit point; and the filtered channeling means are configured to direct the liquid from the inlet top section to the inlet middle section through the bridge area to the cartridge middle section, where it enters the filter capsule, and after filtering, the filtered liquid is directed to the cartridge lower section and through the bridge area to the inlet lower section for discharging through the inlet exit point. The filter, wherein, when the exit point is in the cartridge: the unfiltered channeling means are configured to direct the liquid from the inlet top section to the inlet middle section and through the bridge area to the cartridge middle section, where it bypasses the filter capsule, and without filtering, the liquid is directed to the cartridge lower section for discharging through the cartridge exit point; and the filtered channeling means are configured to direct the liquid from the inlet top section to the inlet middle section through the bridge area to the cartridge middle section, where it enters the filter capsule, and after filtering, the filtered liquid is directed to the cartridge lower section for discharging through the cartridge exit point. The filter, wherein the cartridge top and middle sections are configured with complementary fastening means configured for their removeable coupling to eachother. The filter, wherein the cartridge middle and lower sections are configured with complementary fastening means configured for their removeable coupling to eachother. The filter, wherein the cartridge middle section is configured to house the cartridge lower section which supports the filter capsule, wherein substantially all of the filter capsule and cartridge lower section is housed within the cartridge middle section for the exception of cartridge lower section handling means configured for gripping the cartridge lower section. The filter, wherein the cartridge top section comprises control means housed in a removably attached sealed housing. The filter, wherein the filter further comprises wires to transport sensor information to the control means, and the control means are configured for collecting data from the sensors. The filter, wherein the control means further comprises at least one communications means configured for transmitting and receiving data to and from an external communications device. The filter, wherein the sensing means comprises a first set of sensors placed in the inlet middle section. The filter, wherein the first set of sensors comprises a liquid flow sensor. The filter, wherein the first set of sensors comprises a switch state determination means. The filter, wherein the sensing means comprises a second set of sensors placed in the inlet lower section or in the cartridge lower section, wherein the inlet lower section or the cartridge lower section comprises a liquid chamber configured for holding the liquid a short interval allowing the second set of sensors to perform liquid parameter readings. The filter, wherein the second set of sensors comprises at least one of a temperature sensor for measuring a temperature parameter, or a conductivity sensor for measuring a conductivity parameter, or a pH sensor for measuring a pH parameter, or a turbidity sensor for measuring a turbidity parameter, or a mineral sensor for measuring a mineral parameter, or a chemical sensor for measuring a chemical parameter, or an ion sensor configured to determine any combination of a pH parameter, or a chlorine parameter, or an oxidation reduction potential parameter, or a nitrate parameter, or a sodium parameter, or a calcium parameter, or a dissolved oxygen parameter or a heavy metal parameter. The filter, wherein the control means are further configured for controlling at least one visual and/or audible indicator. The filter, wherein the control means are further configured for interacting with a software application executing on the external communications device. The filter, wherein the control means are further configured for controlling the indicators as a function of information received from the external communications device. The filter, wherein the control means are further configured for controlling the indicators for communicating at least one of the level of usage of the filter capsule, the remaining useful lifetime of the filter capsule, notification for filter capsule replacement, unfiltered or filtered mode, different degrees of quality of the unfiltered or filtered liquid, whether it is actively communicating with external communication devices and exchanging data, indicating the level of usage of the rechargeable battery or remaining rechargeable battery lifetime. The filter, wherein the control means are configured to process the received sensor information to provide quality indicators in both unfiltered as well as in filtered mode. The filter, wherein the second set of sensors comprises a filter capsule sensor configured to determine whether the filter capsule has been removed, and wherein the control means are configured to log this sensor information and reset a filter capsule lifetime timer. The filter, wherein the control means are configured to determine and notify a degree of unfiltered liquid and filtered liquid consumption safety based upon the received sensor information. The filter, wherein the liquid consumption safety comprises three levels, a first level indicating the liquid is safe to drink, a second level indicating the liquid is safe to drink but with some risk, and a third level indicating the liquid is not safe to drink. The filter, wherein the control means are configured to provide an indication of a degree of limescale in the liquid as a function of the conductivity parameter. The filter, wherein the control means are configured to provide an indication of a degree of chlorine in the liquid as a function of the chlorine parameter. The filter, wherein the control means are configured to provide an indication of a degree of taste of the liquid, as a function of the chlorine parameter and the degree of limescale. The filter, wherein the control means are configured for determining a degree of liquid salinity as a function of the conductivity parameter. The filter, wherein the control means are configured to calibrate the conductivity sensor as a function of the temperature parameter. The filter, wherein the control means are configured for determining abnormally high or low values for the sensed parameters and triggering a warning alarm. The filter, wherein the control means are configured for determining whether the temperature parameter from the temperature sensor exceeds a maximum temperature threshold. The filter, wherein the control means are configured to determine a degree of particle removal effectiveness as a function of the turbidity parameter. The filter, wherein the control means comprises power management means configured to minimize the power consumption of the filter. The filter, wherein the power management means are configured for alternating the filter between an active state and a sleep state. The filter, wherein the power management means are configured for determining whether there is liquid flowing through the inlet as a function of the flow parameter, and for activating the sensing means only when liquid is running through the filter.

A method for real-time liquid quality monitoring in a filter configured for housing at least one replaceable filter capsule for filtering liquids, the method comprising: receiving liquid in the filter from an external source; determining at least one parameter of the liquid by at least one sensor, wherein the sensing comprises acting upon unfiltered liquid as well as filtered liquid; and discharging the liquid from the filter.

The method, further comprising setting the filter to unfiltered mode or filtered mode. The method, wherein the filter comprises a single exit point configured either in an inlet or in a cartridge. The method, further comprising collecting data from the at least one sensor. The method, further comprising transmitting and receiving data to and from an external communications device. The method, further comprising collecting a flow parameter from a liquid flow sensor. The method, further comprising determining if the filter is in an unfiltered mode or in a filtered mode. The method, further comprising holding the liquid a short interval allowing at least one sensor to perform liquid parameter readings. The method, wherein the at least one sensor comprises at least one of a temperature sensor for measuring a temperature parameter, or a conductivity sensor for measuring a conductivity parameter, or a pH sensor for measuring a pH parameter, or a turbidity sensor for measuring a turbidity parameter, or a mineral sensor for measuring a mineral parameter, or a chemical sensor for measuring a chemical parameter, or an ion sensor configured to determine any combination of a pH parameter, or a chlorine parameter, or an oxidation reduction potential parameter, or a nitrate parameter, or a sodium parameter, or a calcium parameter, or a dissolved oxygen parameter or a heavy metal parameter. The method, further comprising controlling at least one visual and/or audible indicator. The method, further comprising interacting with a software application executing on the external communications device. The method, further comprising controlling the indicators as a function of information received from the external communications device. The method, further comprising communicating at least one of the level of usage of the filter capsule, the remaining useful lifetime of the filter capsule, notification for filter capsule replacement, unfiltered or filtered mode, different degrees of quality of the unfiltered or filtered liquid, whether it is actively communicating with external communication devices and exchanging data, indicating the level of usage of the rechargeable battery or remaining battery useful lifetime. The method, further comprising determining whether the filter capsule has been removed, and logging this sensor information and resetting a filter capsule lifetime timer. The method, further comprising determining and notifying a degree of unfiltered liquid and filtered liquid consumption safety based upon the received sensor information. The method, wherein the liquid consumption safety comprises three levels, a first level indicating the liquid is safe to drink, a second level indicating the liquid is safe to drink but with some risk, and a third level indicating the liquid is not safe to drink. The method, further comprising providing an indication of a degree of limescale in the liquid. The method, further comprising providing an indication of a degree of chlorine in the liquid. The method, further comprising providing an indication of a degree of taste of the liquid, as a function of the chlorine parameter and the limescale parameter. The method, further comprising providing an indication of a degree of liquid salinity as a function of the conductivity parameter. The method, further comprising calibrating the conductivity sensor as a function of the temperature parameter. The method, further comprising determining abnormally high or low values for the sensed parameters and triggering a warning alarm. The method, further comprising determining whether the temperature parameter from the temperature sensor exceeds a maximum temperature threshold. The method, further comprising determining a degree of particle removal effectiveness as a function of the turbidity parameter. The method, further comprising minimizing the power consumption of the filter. The method, comprising alternating the filter between an active state and a sleep state. The method, further comprising determining whether there is liquid flowing through the inlet and activating the sensing means only when liquid is running through the filter.

An infrastructure for providing liquid, such as water, the infrastructure comprising multiple points-of-use, such as faucets or pipe-ends, the infrastructure comprising a filter attached to at least one point-of-use for real-time quality monitoring of liquids.

The infrastructure, further comprising means for receiving information from the at least one filter and storing it in a liquid quality database. The infrastructure, further comprising means for determining and storing comparative information about the liquid provided into the infrastructure by the liquid operator and the liquid delivered at the point of use at home, before and after filtering. The infrastructure, further comprising means for providing liquid quality information to the electronic communications device of filter users. The infrastructure, further comprising means for providing liquid quality information to utility companies, liquid treatment plants, agencies, and similar, in order to improve the quality of the liquid provided by the whole infrastructure by all stakeholders. The infrastructure, wherein the comparative information is related to different filters within the same building, or between different buildings of the same neighbourhood, or between different neighbourhoods, or between different cities, or between different regions, or between different countries.

A method in an infrastructure for providing liquid, such as water, the infrastructure comprising multiple points-of-use, such as faucets or pipe-ends, the infrastructure comprising a filter attached to at least one point-of-use, the filter configured to perform the method for real-time quality monitoring of liquids.

The method, further comprising receiving information from the at least one filter and storing it in a liquid quality database. The method, further comprising determining and storing comparative information about the liquid provided into the infrastructure by the liquid operator and the liquid delivered at the point of use at home, before and after filtering. The method, further comprising providing liquid quality information to the electronic communications device of filter users. The method, further comprising providing liquid quality information to utility companies, liquid treatment plants, agencies, and similar, in order to improve the quality of the liquid provided by the whole infrastructure by all stakeholders. The method, wherein the comparative information is related to different filters within the same building, or between different buildings of the same neighbourhood, or between different neighbourhoods, or between different cities, or between different regions, or between different countries.

A computer program comprising instructions, once executed on a processor, for performing the method steps.

A computer readable medium comprising instructions, once executed on a processor, for performing the method steps.

**Claims**

1. A filter configured for providing unfiltered and filtered liquid, the filter comprising:

   an inlet configured for receiving unfiltered liquid from an external source;
   a cartridge, coupled to the inlet, configured for receiving a replaceable filter capsule configured for filtering the liquid;
   an exit point configured for discharging the liquid, unfiltered or filtered, from the filter; and
   sensing means configured for determining at least one parameter of the unfiltered liquid as well as the filtered liquid.

2. The filter according to claim 1, further comprising switching means configured for setting the filter in unfiltered mode or filtered mode.

3. The filter according to claim 2, further comprising:

   unfiltered channeling means configured for directing the unfiltered liquid to the exit point without passing through the replaceable filter capsule; and
   filtered channeling means configured for directing the unfiltered liquid through the replaceable filter capsule before discharging the filtered liquid through the exit point.

4. The filter according to claim 3, wherein the filter comprises a single exit point configured either in the inlet or in the cartridge.

5. The filter according to claim 4, wherein:

   the inlet comprises a top section, a middle section, and a lower section; and
   wherein the cartridge comprises a top section, a middle section, and a lower section.

6. The filter according to claim 5,
   wherein, when the exit point is in the inlet:

   the unfiltered channeling means are configured to direct the liquid from the inlet top section through the inlet middle section to the inlet lower section for discharging through the inlet exit point; and
   the filtered channeling means are configured to direct the liquid from the inlet top section to the inlet middle section through the bridge area to the cartridge middle section, where it enters the filter capsule, and after filtering, the filtered liquid is directed to the cartridge lower section and through the bridge area to the inlet lower section for discharging through the inlet exit point;

or wherein, when the exit point is in the cartridge:

the unfiltered channeling means are configured to direct the liquid from the inlet top section to the inlet middle section and through the bridge area to the cartridge middle section, where it bypasses the filter capsule, and without filtering, the liquid is directed to the cartridge lower section for discharging through the cartridge exit point; and
the filtered channeling means are configured to direct the liquid from the inlet top section to the inlet middle section through the bridge area to the cartridge middle section, where it enters the filter capsule, and after filtering, the filtered liquid is directed to the cartridge lower section for discharging through the cartridge exit point.

7. The filter according to claim 5, wherein the cartridge top section comprises control means housed in a removably attached sealed housing.

8. The filter according to claim 7, wherein the filter further comprises wires to transport sensor information to the control means, and the control means are configured for collecting data from the sensors, wherein the control means further comprises at least one communications means configured for transmitting and receiving data to and from an external communications device.

9. The filter according to claim 5, wherein the sensing means comprises a first set of sensors placed in the inlet middle section, comprising a liquid flow sensor or a switch state determination means.

10. The filter according to claim 5, wherein the sensing means comprises a second set of sensors placed in the inlet lower section or in the cartridge lower section, wherein the inlet lower section or the cartridge lower section comprises a liquid chamber configured for holding the liquid a short interval allowing the second set of sensors to perform liquid parameter readings, wherein the second set of sensors comprises at least one of a temperature sensor for measuring a temperature parameter, or a conductivity sensor for measuring a conductivity parameter, or a pH sensor for measuring a pH parameter, or a turbidity sensor for measuring a turbidity parameter, or a mineral sensor for measuring a mineral parameter, or a chemical sensor for measuring a chemical parameter, or an ion sensor configured to determine any combination of a pH parameter, or a chlorine parameter, or an oxidation reduction potential parameter, or a nitrate parameter, or a sodium parameter, or a calcium parameter, or a dissolved oxygen parameter or a heavy metal parameter.

11. The filter according to claim 7,
wherein the control means are further configured for controlling at least one visual and/or audible indicator;
or wherein the control means are further configured for interacting with a software application executing on the external communications device;
or wherein the control means are further configured for controlling the indicators as a function of information received from the external communications device;
or wherein the control means are further configured for controlling the indicators for communicating at least one of the level of usage of the filter capsule, the remaining useful lifetime of the filter capsule, notification for filter capsule replacement, unfiltered or filtered mode, different degrees of quality of the unfiltered or filtered liquid, whether it is actively communicating with external communication devices and exchanging data, indicating the level of usage of the rechargeable battery or remaining rechargeable battery lifetime.

12. The filter according to claim 7, wherein the control means are configured to process the received sensor information to provide quality indicators in both unfiltered as well as in filtered mode,
wherein the second set of sensors comprises a filter capsule sensor configured to determine whether the filter capsule has been removed, and wherein the control means are configured to log this sensor information and reset a filter capsule lifetime timer;
or wherein the control means are configured to determine and notify a degree of unfiltered liquid and filtered liquid consumption safety based upon the received sensor information, wherein the liquid consumption safety comprises three levels, a first level indicating the liquid is safe to drink, a second level indicating the liquid is safe to drink but with some risk, and a third level indicating the liquid is not safe to drink;
or wherein the control means are configured to provide an indication of a degree of limescale in the liquid as a function of the conductivity parameter;
or wherein the control means are configured to provide an indication of a degree of chlorine in the liquid as a function of the chlorine parameter;
or wherein the control means are configured to provide an indication of a degree of taste of the liquid, as a function of the chlorine parameter and the degree of limescale;

or wherein the control means are configured for determining a degree of liquid salinity as a function of the conductivity parameter, wherein the control means are configured to calibrate the conductivity sensor as a function of the temperature parameter;

or wherein the control means are configured for determining abnormally high or low values for the sensed parameters and triggering a warning alarm, wherein the control means are configured for determining whether the temperature parameter from the temperature sensor exceeds a maximum temperature threshold;

or wherein the control means are configured to determine a degree of particle removal effectiveness as a function of the turbidity parameter.

13. The filter according to claim 7, wherein the control means comprises power management means configured to minimize the power consumption of the filter, wherein the power management means are configured for alternating the filter between an active state and a sleep state, wherein the power management means are configured for determining whether there is liquid flowing through the inlet as a function of the flow parameter, and for activating the sensing means only when liquid is running through the filter.

14. A method for real-time liquid quality monitoring in a filter configured for housing at least one replaceable filter capsule for filtering liquids, the method comprising:

> receiving liquid in the filter from an external source;
> determining at least one parameter of the liquid by at least one sensor, wherein the sensing comprises acting upon unfiltered liquid as well as filtered liquid; and
> discharging the liquid from the filter.

15. An infrastructure for providing liquid, such as water, the infrastructure comprising multiple points-of-use, such as faucets or pipe-ends, the infrastructure comprising a filter according to claim 1 attached to at least one point-of-use for real-time quality monitoring of liquids.

16. The infrastructure according to claim 15, further comprising means for receiving information from the at least one filter and storing it in a liquid quality database, further comprising means for determining and storing comparative information about the liquid provided into the infrastructure by the liquid operator and the liquid delivered at the point of use at home, before and after filtering.

17. The infrastructure according to claim 16,

further comprising means for providing liquid quality information to the electronic communications device of filter users;

or further comprising means for providing liquid quality information to utility companies, liquid treatment plants, agencies, and similar, in order to improve the quality of the liquid provided by the whole infrastructure by all stakeholders;

or wherein the comparative information is related to different filters within the same building, or between different buildings of the same neighbourhood, or between different neighbourhoods, or between different cities, or between different regions, or between different countries.

18. A method in an infrastructure for providing liquid, such as water, the infrastructure comprising multiple points-of-use, such as faucets or pipe-ends, the infrastructure comprising a filter attached to at least one point-of-use, the filter configured to perform the method according to claim 14 for real-time quality monitoring of liquids.

FIG. 1
PRIOR ART

FIG. 2

270

230

260

120

250

110

290

295

240

230

220

120

210

110

290

295

200

FIG. 2 (continued)

222

224

226

242

244

246

210

262

264

266

272

274

276

250

200

EP 3 909 917 A1

FIG. 3

FIG. 4

**FIG. 4 (continued)**

450

NEW

440

OLD

Europäisches
Patentamt

European
Patent Office

Office européen
des brevets

# EUROPEAN SEARCH REPORT

Application Number

EP 20 38 2411

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/040121 A1 (GIORDANO EDWARD C [US] ET AL) 15 November 2001 (2001-11-15) | 1-14 | INV. C02F1/00 B01D27/02 B01D27/10 |
| Y | * figures 1-20 * <br> * paragraph [0037] - paragraph [0078] * | 15-18 | |
| Y | US 2006/020427 A1 (KAHN MALCOLM R [US] ET AL) 26 January 2006 (2006-01-26) | 15-18 | ADD. C02F1/28 C02F5/08 |
| A | * figures 1-4 * <br> * paragraph [0009] - paragraph [0012] * <br> * paragraph [0038] - paragraph [0079] * | 1-14 | |
| A | US 2006/060512 A1 (ASTLE ROBERT E [US] ET AL) 23 March 2006 (2006-03-23) <br> * figures 1-24 * <br> * paragraph [0008] - paragraph [0024] * <br> * paragraph [0050] - paragraph [0084] * | 1-18 | |
| A | US 10 501 343 B1 (HOEFFERLE ERICH G [US] ET AL) 10 December 2019 (2019-12-10) <br> * the whole document * | 1-18 | |
| A | US 2015/068987 A1 (BASSETT LAURENCE W [US] ET AL) 12 March 2015 (2015-03-12) <br> * the whole document * | 1-18 | TECHNICAL FIELDS SEARCHED (IPC) <br><br> C02F B01D |

The present search report has been drawn up for all claims

| Place of search | Date of completion of the search | Examiner |
|---|---|---|
| The Hague | 19 October 2020 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 38 2411

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2020

| Patent document cited in search report | | Publication date | Patent family member(s) | | Publication date |
|---|---|---|---|---|---|
| US 2001040121 | A1 | 15-11-2001 | UA | 73272 C2 | 15-09-2000 |
| | | | US | 5935426 A | 10-08-1999 |
| | | | US | 6106705 A | 22-08-2000 |
| | | | US | 6284129 B1 | 04-09-2001 |
| | | | US | 2001040121 A1 | 15-11-2001 |
| | | | US | 2003173273 A1 | 18-09-2003 |
| US 2006020427 | A1 | 26-01-2006 | US | 2006020427 A1 | 26-01-2006 |
| | | | WO | 2006020784 A1 | 23-02-2006 |
| US 2006060512 | A1 | 23-03-2006 | US | 2006060512 A1 | 23-03-2006 |
| | | | US | 2010096302 A1 | 22-04-2010 |
| US 10501343 | B1 | 10-12-2019 | US | 10501343 B1 | 10-12-2019 |
| | | | US | 2020055750 A1 | 20-02-2020 |
| | | | US | 2020216333 A1 | 09-07-2020 |
| | | | WO | 2020033011 A1 | 13-02-2020 |
| US 2015068987 | A1 | 12-03-2015 | NONE | | |

EPO FORM P0459

For more details about this annex : see Official Journal of the European Patent Office, No. 12/82